(19)

Europäisches
Patentamt

European
Patent Office

Office européen
des brevets

(11) **EP 2 705 923 A1**

(12) **EUROPEAN PATENT APPLICATION**

(43) Date of publication:
**12.03.2014 Bulletin 2014/11**

(51) Int Cl.:
*B23K 11/11* (2006.01)     *B23K 11/25* (2006.01)
*B23K 11/31* (2006.01)     *B23K 11/36* (2006.01)

(21) Application number: **13175140.6**

(22) Date of filing: **04.07.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.08.2012   JP 2012186925**

(71) Applicant: **Kabushiki Kaisha Yaskawa Denki
Kitakyushu-shi, Fukuoka 806-0004 (JP)**

(72) Inventor: **Kimoto, Kazuhiko
Kitakyushu-shi,
Fukuoka 806-0004 (JP)**

(74) Representative: **Viering, Jentschura & Partner
Patent- und Rechtsanwälte
Grillparzerstrasse 14
81675 München (DE)**

(54) **Spot welding apparatus with a controller configured to calculate the bending degree of the arms supporting an electrode and correcting such bending**

(57)     Te present application describe a spot welding apparatus (1), which includes a robot (2), a spot welding gun (10), and a controller (4). The spot welding gun (10) includes a gun arm (10b), a fixed electrode (10c), a movable electrode (10d), and a gun-dedicated motor (10e). The fixed electrode (10c) is fixed to the gun arm (10b). The movable electrode (10d) is disposed on the gun arm (10b) at a position opposite a position at which the fixed electrode (10c) is disposed. The gun-dedicated motor (10e) is configured to move the movable electrode (10d). The controller (4) is configured to output a position command to the gun-dedicated motor (10e) so as to control the gun-dedicated motor (10e) to move the movable electrode (10d), configured to control the fixed electrode (10c) and the movable electrode (10d) to hold a to-be-welded object (W) under pressure between the fixed electrode (10c) and the movable electrode (10d), and configured to subject the to-be-welded object (W) to spot welding.

**FIG. 1**

**Description**

BACKGROUND OF THE INVENTION

FIELD OF THE INVENTION

The present invention relates to a spot welding apparatus.

DISCUSSION OF THE BACKGROUND

Conventionally, a spot welding apparatus includes a spot welding gun that has a fixed electrode and a movable electrode. A gun-dedicated motor causes the movable electrode to move toward the fixed electrode, so that a to-be-welded object is held under pressure between the fixed electrode and the movable electrode. With the to-be-welded object in this state, current is allowed to flow between the fixed electrode and the movable electrode for a predetermined period of time, thus subjecting the to-be-welded object to spot welding (see, for example, Japanese Patent No. 2596722).

For appropriate implementation of this spot welding, the welding pressure of the movable electrode against the to-be-welded object is preferably at a desired value. In view of this, in the spot welding apparatus, a torque command is set in advance for the gun-dedicated motor to make the welding pressure into the desired value. The torque command is output to the gun-dedicated motor, that is, the gun-dedicated motor is torque-controlled when the to-be-welded object is held under pressure and subjected to spot welding.

The contents of Japanese Patent No. 2596722 are incorporated herein by reference in their entirety.

However, for example, a ball screw mechanism, which transmits the output of the gun-dedicated motor to the movable electrode, has its static friction coefficient and dynamic friction coefficient varied due to break-in or other factors that develop through repeated operations. Hence, a possible situation was that as time elapses, the use of the torque command set in advance in the motor control as described above may not ensure the desired value for the welding pressure against the to-be-welded object.

Additionally, these friction coefficients vary in accordance with the atmosphere temperature of the spot welding apparatus. Hence, a possible situation was that the friction coefficients may vary depending on the atmosphere temperature while at the same time the desired value for the welding pressure may not be ensured. Further, a possible situation was that under the influence of gravity, which depends on the posture of the spot welding gun, the desired value for the welding pressure against the to-be-welded object may not be ensured.

The present invention has been made in view of the above-described circumstances, and an object is to provide a spot welding apparatus that ensures a desired value for the welding pressure that the movable electrode of the spot welding gun applies on the to-be-welded object.

SUMMARY OF THE INVENTION

According to one aspect of the present invention, a spot welding apparatus includes a robot, a spot welding gun, and a controller. The spot welding gun includes a gun arm, a fixed electrode, a movable electrode, and a gun-dedicated motor. The fixed electrode is fixed to the gun arm. The movable electrode is disposed on the gun arm at a position opposite a position at which the fixed electrode is disposed. The gun-dedicated motor is configured to move the movable electrode. The controller is configured to output a position command to the gun-dedicated motor so as to control the gun-dedicated motor to move the movable electrode, configured to control the fixed electrode and the movable electrode to hold a to-be-welded object under pressure between the fixed electrode and the movable electrode, and configured to subject the to-be-welded object to spot welding.

The one aspect of the present invention ensures a desired value for the welding pressure that the movable electrode of the spot welding gun applies on the to-be-welded object.

BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:

FIG. 1 is a schematic general view of a spot welding apparatus according to an embodiment, illustrating an exemplary configuration of the spot welding apparatus;
FIG. 2 is a schematic enlarged view of the spot welding gun shown in FIG. 1;
FIG. 3 is a block diagram illustrating a configuration of the spot welding apparatus shown in FIG. 1;

FIG. 4 is a schematic view of a fixed electrode and a movable electrode shown in FIG. 1 in a state of holding between them a to-be-welded object under pressure;

FIG. 5 is a flowchart of an operation of a controller of the spot welding apparatus shown in FIG. 1; and

FIG. 6 is a schematic general view of the spot welding apparatus shown in FIG. 1, illustrating a modified exemplary configuration of the spot welding apparatus.

DESCRIPTION OF THE EMBODIMENTS

The embodiments will now be described with reference to the accompanying drawings, wherein like reference numerals designate corresponding or identical elements throughout the various drawings.

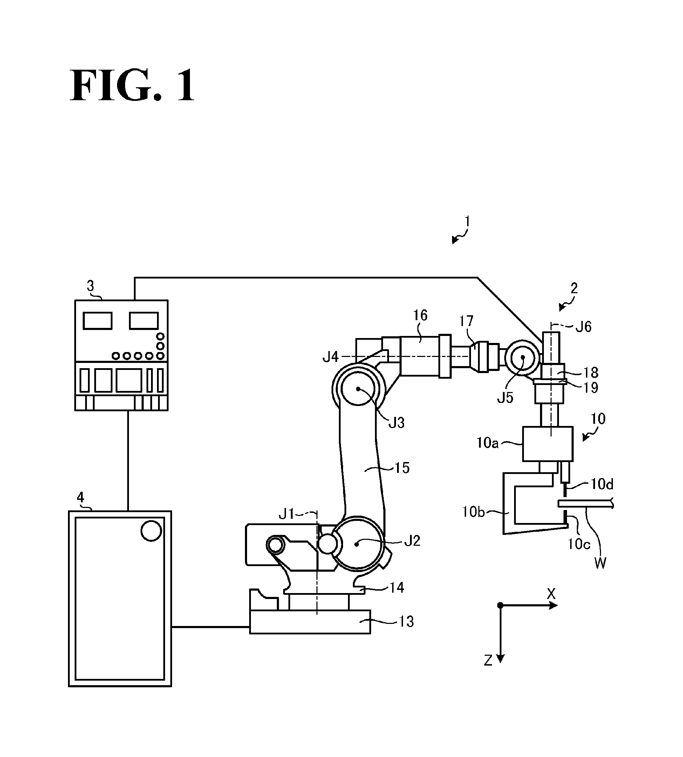

FIG. 1 is a schematic general view of a spot welding apparatus according to an embodiment, illustrating an exemplary configuration of the spot welding apparatus. As shown in FIG. 1, a spot welding apparatus 1 according to this embodiment includes a spot welding robot 2 (hereinafter referred to as "robot 2"), a welding power source 3, a controller 4, and a spot welding gun 10.

The robot 2 is a multi-articular robot having a plurality of joint axes J1 to J6. The robot 2 includes a base 13, a rotary portion 14, a lower arm 15, an upper arm 16, a first wrist 17, a second wrist 18, and a wrist flange 19. These elements are rotatable relative to each other.

Specifically, the rotary portion 14 is coupled to the base 13 rotatably about the joint axis J1. The lower arm 15 is coupled to the rotary portion 14 rotatably about the joint axis J2, which is approximately orthogonal to the joint axis J1. The upper arm 16 is coupled to the lower arm 15 rotatably about the joint axis J3, which is approximately parallel to the joint axis J2. The first wrist 17 is coupled to the upper arm 16 rotatably about the joint axis J4, which is approximately orthogonal to the joint axis J3.

The second wrist 18 is coupled to the first wrist 17 rotatably about the joint axis J5, which is approximately orthogonal to the joint axis J4. The wrist flange 19 is coupled to the second wrist 18 rotatably about the joint axis J6, which is approximately orthogonal to the joint axis J5.

The robot 2 includes robot-dedicated motors M1 to M6, not shown (hereinafter collectively referred to as a robot-dedicated motor M), which respectively correspond to the joint axes J1 to J6 to drive the robot 2. The robot-dedicated motor M has its operations controlled by the controller 4. While the robot-dedicated motor M is specifically a servo motor, this should not be construed in a limiting sense. Other examples of the motor include a hydraulic pressure motor.

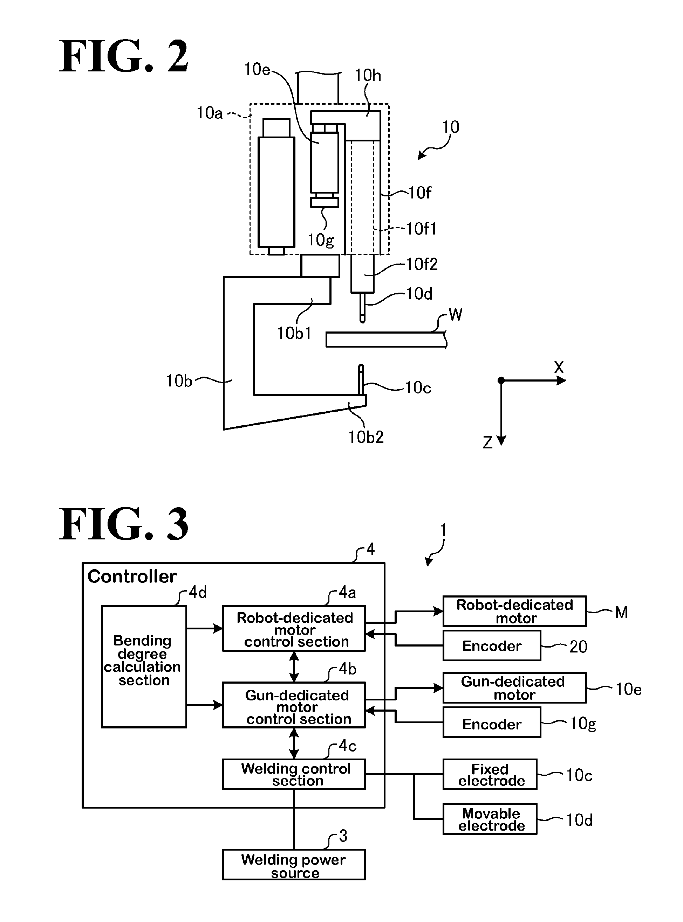

An encoder 20, not shown in FIG. 1 (see FIG. 3), is mounted to each element of the robot-dedicated motor M. The encoder 20 outputs, to the controller 4, an encoder value indicating the rotation degree and rotation angle of the robot-dedicated motor M.

While the robot 2 is illustrated as a 6-axis robot, this configuration should not be construed in a limiting sense. It is also possible to use, for example, a 7-axis robot or an 8-axis robot, other than the 6-axis robot.

The spot welding gun 10 is mounted to the distal end of the robot 2. The spot welding gun 10 has its position, angle, orientation, and other parameters controlled by the controller 4's control of the robot-dedicated motor M.

The spot welding gun 10 is a C-type spot welding gun, and includes a housing 10a, a gun arm 10b, a fixed electrode 10c, and a movable electrode 10d. While the spot welding gun 10 is illustrated as a C-type spot welding gun, this should not be construed in a limiting sense. It is also possible to use any other type of spot welding gun, examples including a one-side driven X-type spot welding gun.

FIG. 2 is a schematic enlarged view of the spot welding gun shown in FIG. 1. In FIG. 2, for ease of understanding, the housing 10a is indicated in phantom lines. As shown in FIG. 2, the housing 10a accommodates a gun-dedicated motor 10e, a ball screw mechanism 10f, an encoder 10g, and a reducer 10h.

The gun-dedicated motor 10e has its operation controlled by the controller 4, similarly to the robot-dedicated motor M, so as to move the movable electrode 10d. While the gun-dedicated motor 10e is specifically a servo motor, any other kind of motor is possible insofar as the motor can be position-controlled by the controller 4, as described later.

The ball screw mechanism 10f includes a screw shaft $10f_1$ and a nut $10f_2$. The screw shaft $10f_1$ has one end coupled to the output shaft of the gun-dedicated motor 10e through the reducer 10h, and another end in the vicinity of which the nut $10f_2$ is threaded through a ball, not shown. To the nut $10f_2$, the movable electrode 10d is mounted.

Thus, when the gun-dedicated motor 10e rotates, its rotation output is transmitted to the screw shaft $10f_1$ through the reducer, making the screw shaft $10f_1$ into rotation. In conjunction with rotation of the screw shaft $10f_1$, the nut $10f_2$ and the movable electrode 10d expand or contract in the upward direction or the downward direction in FIG. 2. Thus, the ball screw mechanism 10f is a mechanism to convert the rotational motion of the gun-dedicated motor 10e into linear motion of the movable electrode 10d.

The encoder 10g is mounted to the gun-dedicated motor 10e and outputs, to the controller 4, an encoder value indicating the rotation degree and rotation angle of the gun-dedicated motor 10e. The gun arm 10b has an approximately C-shaped side view. Also the gun arm 10b is elasticity deformable within a predetermined range of stress, and is made of light metal such as an aluminum alloy and beryllium copper.

In this embodiment, the elastic deformation of the gun arm 10b is taken into consideration when the welding pressure that the movable electrode 10d applies on a workpiece W is turned into a desired value. This will be described later by referring to FIG. 3.

The gun arm 10b has one end $10b_1$ coupled to the robot 2 through the housing 10a. In contrast, the gun arm 10b has another end $10b_2$ to which the fixed electrode 10c is fixed. The movable electrode 10d is disposed at a position opposite the fixed electrode 10c. In this specification, the axis direction of the fixed electrode 10c and the axis direction of the movable electrode 10d are each assumed "Z axis direction". An axis direction orthogonal to the Z axis direction, that is, the lateral direction in FIG. 2 is assumed "X axis direction".

With the fixed electrode 10c and the movable electrode 10d being disposed in opposing arrangement as described above, the workpiece W is inserted between them as a to-be-welded object. The workpiece W is appropriately fixed on a stand or like element, which is not elaborated in the drawings.

FIG. 3 is a block diagram illustrating a configuration of the spot welding apparatus 1 shown in FIG. 1. As shown in FIG. 3, the controller 4 includes a robot-dedicated motor control section 4a, a gun-dedicated motor control section 4b, a welding control section 4c, and a bending-degree calculation section 4d. The control sections 4a, 4b, and 4c are coupled to each other in a mutually communicable manner. The bending-degree calculation section 4d is coupled to the robot-dedicated motor control section 4a and the gun-dedicated motor control section 4b in a communicable manner.

The robot-dedicated motor control section 4a controls the operation of the robot-dedicated motor M, thereby driving the robot 2. The gun-dedicated motor control section 4b controls the operation of the gun-dedicated motor 10e, thereby controlling the movable electrode 10d of the spot welding gun 10 to expand or contract so as to hold the workpiece W under pressure between the fixed electrode 10c and the movable electrode 10d, or so as to release the workpiece W that is being held under pressure. It is noted that FIG. 3 shows only those elements, among the configuration of the controller 4, that are particularly relevant to the description of this embodiment.

Here, control of a general gun-dedicated motor will be described. Spot welding includes holding a workpiece under pressure between the fixed electrode and the movable electrode, and with the workpiece in this state, allowing current to flow between the fixed electrode and the movable electrode for a predetermined period of time.

For appropriate implementation of this spot welding, the welding pressure of the movable electrode against the workpiece is preferably at a desired value. In view of this, in a general spot welding apparatus, a torque command is set in advance through an experiment or the like for the gun-dedicated motor to make the welding pressure at the desired value. The torque command is output to the gun-dedicated motor, that is, the gun-dedicated motor is torque-controlled when the workpiece is held under pressure and subjected to spot welding.

However, for example, the ball screw mechanism has its static friction coefficient and dynamic friction coefficient varied due to break-in or other factors that develop through repeated operations. Hence, a possible situation was that as time elapses, the use of the torque command set in advance in the motor control as described above may not ensure the desired value for the welding pressure against the workpiece.

Additionally, these friction coefficients vary depending on the atmosphere temperature of the spot welding apparatus. Hence, a possible situation was that the friction coefficients may vary depending on the atmosphere temperature while at the same time the desired value for the welding pressure may not be ensured. Further, a possible situation was that under the influence of gravity, which depends on the posture of the spot welding gun, the desired value for the welding pressure against the workpiece may not be ensured. Furthermore, when the movable electrode is brought into contact with the workpiece at comparatively high speed, a possible situation was that the welding pressure increases over the desired value, failing to improve the tact time.

In view of this, in the spot welding apparatus 1 according to this embodiment, the controller 4 performs position control of outputting a position command to the gun-dedicated motor 10e, so as to control the operation of the gun-dedicated motor 10e. Position control of the gun-dedicated motor 10e in this manner ensures control of the position of the movable electrode 10d, which is driven by the gun-dedicated motor 10e, without influence such as of changes in the friction coefficients of the ball screw mechanism 10f. As a result, the welding pressure is turned into the desired value.

FIG. 3 will be further described. As described above, the gun-dedicated motor control section 4b performs position control to control the operation of the gun-dedicated motor 10e, thereby expanding or contracting the movable electrode 10d. Likewise, the robot-dedicated motor control section 4a performs position control to control the operation of the robot-dedicated motor M, thereby driving the robot 2.

The welding control section 4c is coupled to the welding power source 3. With the workpiece W in held state under pressure between the fixed electrode 10c and the movable electrode 10d, the welding control section 4c allows the current from the welding power source 3 to flow between the fixed electrode 10c and the movable electrode 10d, thus performing spot welding.

The bending-degree calculation section 4d calculates the bending degrees of the gun arm 10b at the time when the desired welding pressure is applied to the workpiece W. The above-described position control of the gun-dedicated motor 10e and position control of the robot-dedicated motor M are performed based on the bending degrees calculated by the bending-degree calculation section 4d. This will be described in detail below.

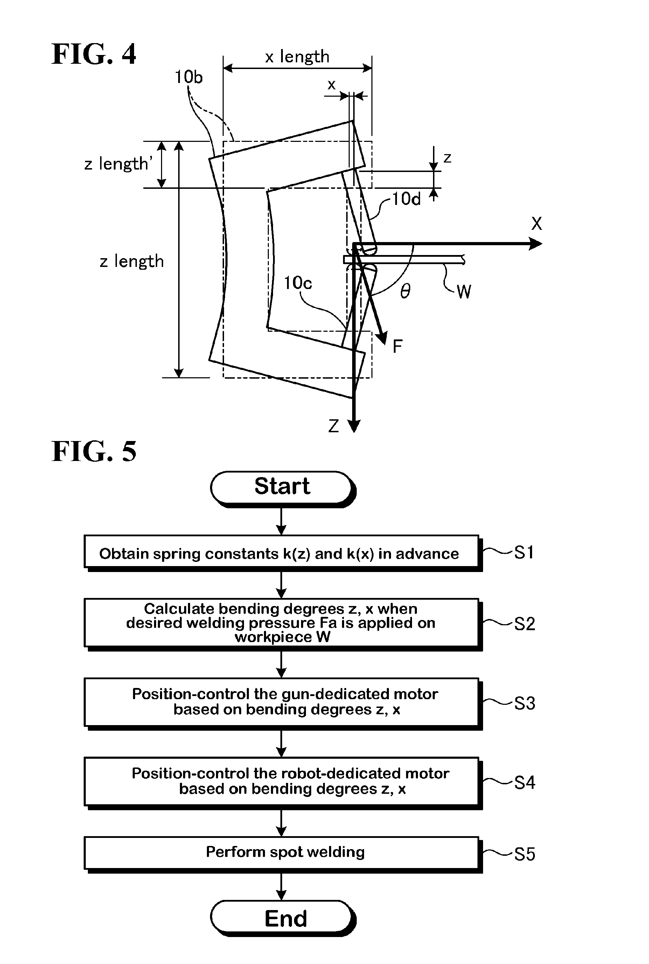

First, calculation of the bending degrees will be described by referring to FIG. 4. FIG. 4 is a schematic view of the fixed electrode 10c and the movable electrode 10d in a state of holding between them the workpiece W under pressure. As shown in FIG. 4, when the fixed electrode 10c and the movable electrode 10d hold between them the workpiece W under pressure, thereby increasing the welding pressure, then the gun arm 10b elastically deforms in the Z axis direction and the X axis direction, since the gun arm 10b is elastically deformable as described above.

In FIG. 4, the gun arm 10b that is not yet elastically deformed is indicated in imaginary lines. Also, FIG. 4 shows the gun arm 10b in its elastically deformed state in an exaggerated manner for the sake of description, with the result that the length of each electrode and other dimensions might be illustrated as contradicting themselves before and after the elastic deformation.

The bending-degree calculation section 4d takes into consideration this elastic deformation phenomenon of the gun arm 10b when the workpiece W is held under pressure, and obtains, using formulae, the bending degrees of the gun arm 10b at the time when the desired welding pressure is applied to the workpiece W.

This will be described below. As shown in FIG. 4, the welding pressure that the movable electrode 10d applies to the workpiece W is assumed F. The angle defined by the vector of the welding pressure F and the X axis direction is assumed $\theta$. The welding pressure F is represented based on Hooke's law as in the following Formulae (1) and (2).

$$F \times \sin\theta = k(z) \times z \cdots \text{Formula (1)}$$

$$F \times \cos\theta = k(x) \times x \cdots \text{Formula (2)}$$

where $k(z)$ denotes the spring constant of the gun arm 10b in the Z axis direction, $k(x)$ denotes the spring constant of the gun arm 10b in the X axis direction, z denotes the bending degree of the gun arm 10b in the Z axis direction, and x denotes the bending degree of the gun arm 10b in the X axis direction.

First, the spring constants $k(z)$ and $k(x)$ in Formulae (1) and (2) are calculated in advance through an experiment. As an example of the experiment, a welding pressure sensor is mounted to the movable electrode 10d or another element that applies pressure to the workpiece W, and a bending sensor is mounted to the gun arm 10b. Then, the movable electrode 10d is operated to expand toward the fixed electrode 10c by any predetermined value (hereinafter referred to as "first predetermined value"). This causes the workpiece W to be held under pressure and the gun arm 10b to elastically deform.

The welding pressure output from the welding pressure sensor is assumed $F_1$. The bending degree of the gun arm 10b in the Z axis direction output from the bending sensor is assumed $z_1$. The bending degree of the gun arm 10b in the X axis direction is assumed $x_1$. In this case, Formulae (1) and (2) respectively turn into Formulae (3) and (4).

$$F_1 \times \sin\theta_1 = k(z) \times z_1 \cdots \text{Formula (3)}$$

$$F_1 \times \cos\theta_1 = k(x) \times x_1 \cdots \text{Formula (4)}$$

where $\theta_1$ denotes the angle defined by the vector of the welding pressure $F_1$ and the X axis direction.

Next in the experiment, the movable electrode 10d is operated to expand toward the fixed electrode 10c by a second predetermined value different from the first predetermined value. This causes the workpiece W to be held under pressure and the gun arm 10b to elastically deform. The outputs of the welding pressure sensor and the bending sensor in this state are read, similarly to the above.

The welding pressure output from the welding pressure sensor is assumed $F_2$. The bending degree of the gun arm 10b in the Z axis direction output from the bending sensor is assumed $z_2$. The bending degree of the gun arm 10b in the X axis direction is assumed $x_2$. In this case, Formulae (1) and (2) respectively turn into the following Formulae (5) and (6).

$$F_2 \times \sin\theta_2 = k(z) \times z_2 \cdots \text{Formula (5)}$$

$$F_2 \times \cos\theta_2 = k(x) \times x_2 \cdots \text{Formula (6)}$$

where $\theta_2$ denotes the angle defined by the vector of the welding pressure $F_2$ and the X axis direction.

Next, four Formulae (3) to (6) are solved to obtain the spring constants $k(z)$ and $k(x)$. Specifically, for example, Formulae (3) and (4) are solved to cancel $\theta_1$, while Formulae (5) and (6) are solved to cancel $\theta_2$. This leads to two formulae respectively made up of the spring constants $k(z)$ and $k(x)$ and those obtained from the sensor outputs, that is, the welding pressures $F_1$ and $F_2$, the bending degrees $z_1$ and $z_2$, and $x_1$ and $x_2$. These formulae are solved to obtain the spring constants $k(z)$ and $k(x)$.

Further, the Poisson's ratio $\nu$ of the gun arm 10b is also calculated. Poisson's ratio $\nu$ is the ratio of lateral strain [%] to longitudinal strain [%]. For example, with the length of the gun arm 10b in the Z axis direction assumed z length and the length in the X axis direction assumed x length, Poisson's ratio $\nu$ can be obtained by the following Formula (7) or Formula (8).

$$\text{Poisson's ratio } \nu = (x_1/x \text{ length})/(z_1/z \text{ length}) \cdots \text{Formula (7)}$$

$$\text{Poisson's ratio } \nu = (x_2/x \text{ length})/(z_2/z \text{ length}) \cdots \text{Formula (8)}$$

Poisson's ratio $\nu$ is constant insofar as the material of the gun arm 10b is the same, and therefore, can be calculated using either Formula (7) or (8).

It is noted that depending on the shape, characteristics, and other features of the gun arm 10b, it is in some cases more appropriate to use z length' shown in FIG. 4 instead of z length in Formulae (7) and (8). (The method of calculating Poisson's ratio $\nu$ is not itself a point in this embodiment, and therefore, will not be elaborated in detail.) Thus, first the spring constants $k(z)$ and $k(x)$ and Poisson's ratio $\nu$ are calculated in advance through an experiment, and stored in a memory or a like device, not shown, of the controller 4.

The spring constants $k(z)$ and $k(x)$ and Poisson's ratio $\nu$ are calculated, for example, before shipment of the spot welding apparatus 1 from a plant. This, however, should not be construed in a limiting sense. The calculation may also be performed after shipment of the spot welding apparatus 1 and at the site where the spot welding is actually performed.

The spring constants $k(z)$ and $k(x)$ and Poisson's ratio $\nu$ thus obtained of the gun arm 10b are characteristic of the gun arm 10b, and therefore, their values basically remain constant regardless of the greatness of the welding pressure F. Hence, once the spring constants $k(z)$ and $k(x)$ and Poisson's ratio $\nu$ are obtained, the bending degrees z and x at the time when any welding pressure is applied can be calculated using formulae before the welding pressure is actually applied.

In this embodiment, formulae containing the spring constants $k(z)$ and $k(x)$ are used to calculate bending degrees z and x at the time when the desired value, at which appropriate spot welding is performed, is achieved for the welding pressure F, which is applied on the workpiece W by the movable electrode 10d of the gun arm 10b. Based on the calculated bending degrees z and x, the movable electrode 10d and the robot 2 are controlled.

That is, the bending degrees z and x each correspond to the amount of error between the position at which the movable electrode 10d contacts the workpiece W and the target position of the movable electrode 10d at which the welding pressure F is at its desired value. Hence, controlling the operations of the movable electrode 10d and the robot 2 based on the bending degrees z and x matches the target position with the contact position of the movable electrode 10d with the workpiece W.

This will be described in detail. First, as an initial setting, a desired welding pressure Fa, at which appropriate spot welding is performed, is input into the bending-degree calculation section 4d of the controller 4 through an input device, not shown. Upon receipt of the desired welding pressure Fa, the bending-degree calculation section 4d calculates the gun arm 10b's bending degree z in the Z axis direction and bending degree x in the X axis direction. Specifically, the bending degree z can be obtained using Formula (9), which is a modified form of Formula (1), while the bending degree x can be obtained using Formula (10), which is a modified form of Formula (2).

$$z = Fa \times sin\theta/k(z) \cdots \text{Formula (9)}$$

$$x = Fa \times cos\theta/k(x) \cdots \text{Formula (10)}$$

Specifically, for example, Formulae (9) and (10) are solved to cancel $\theta$. This leads to a formula made up of the bending degrees z and x, the welding pressure Fa, which has been input, and the spring constants k(z) and k(x), which have been already obtained through an experiment. As described above, since Poisson's ratio $v$ is constant insofar as the material of the gun arm 10b is the same, a relation formula of the bending degree z and the bending degree x is derived from Poisson's ratio v. By solving these formulae, the bending degree z and the bending degree x are calculated.

Thus, formulae are used to calculate the gun arm 10b's bending degree z in the Z axis direction and bending degree x in the X axis direction at the time when the welding pressure Fa is applied on the workpiece W. This ensures accurate calculation of the bending degrees z and x.

Referring back to FIG. 3, the bending-degree calculation section 4d outputs to the gun-dedicated motor control section 4b the bending degree z calculated at Formula (9) and the bending degree x calculated at Formula (10), and also outputs the bending degree z and the bending degree x to the robot-dedicated motor control section 4a.

The gun-dedicated motor control section 4b controls the operation of the gun-dedicated motor 10e based on the bending degree z, the bending degree x, and the encoder value of the encoder 10g. Specifically, the gun-dedicated motor control section 4b controls the operation of the gun-dedicated motor 10e to move the movable electrode 10d by a degree corresponding a correction amount a, which is calculated based on the bending degree z and the bending degree x.

Specifically, when the gun arm 10b elastically deforms due to the welding pressure Fa applied on the workpiece W, the distal end of the movable electrode 10d is at a position displaced in a direction away from the target position. More specifically, referring to FIG. 4, the displacements are toward the negative side in the Z axis direction and the positive side in the X axis direction. In view of this, in this case, the movable electrode 10d is moved (expanded) by a degree to correct the displacements.

The correction amount a for the movable electrode 10d displaced by the bending degrees z and x can be obtained, for example, based on the Pythagorean theorem as in the following Formula (11).

$$\text{Correction amount } a = \sqrt{z^2 + x^2} \cdots \text{Formula (11)}$$

Thus, the gun-dedicated motor control section 4b controls the operation of the gun-dedicated motor 10e to move in the positive direction in which the movable electrode 10d corrects its displacements in the Z axis direction and in the X axis direction; in other words, to move toward the fixed electrode 10c by a degree corresponding to the correction amount a, which is obtained from the bending degree z and the bending degree x.

This ensures that the contact position of the movable electrode 10d with the workpiece W matches the target position of the movable electrode 10d at which the welding pressure F is at its desired value. In other words, when the gun arm 10b elastically deforms due to the welding pressure Fa applied on the workpiece W, causing displacements to occur between the contact position and target position of the movable electrode 10d in the Z axis direction and in the X axis direction, such displacements are corrected.

In contrast, the robot-dedicated motor control section 4a controls the operation of the robot-dedicated motor M based on the bending degree z and the bending degree x and on the encoder value of the encoder 20. Specifically, the robot-dedicated motor control section 4a controls the operation of the robot-dedicated motor M to drive the robot 2 by a degree corresponding to the bending degree z and the bending degree x.

Specifically, when the gun arm 10b elastically deforms due to the welding pressure Fa applied on the workpiece W, the contact positions of the fixed electrode 10c and the movable electrode 10d are displaced from the respective target positions toward the positive side in the X axis direction as seen in FIG. 4 by a degree corresponding to the bending degree x. In view of this, the robot-dedicated motor control section 4a controls the operation of the robot-dedicated motor M to drive the robot 2 by a degree corresponding to the bending degree x in the negative direction, in which the displacement in the X axis direction is corrected.

Also when the gun arm 10b elastically deforms, the distal end of the fixed electrode 10c is at a position displaced from the target position toward the positive side in the Z axis direction as seen in FIG. 4 by a degree corresponding to the bending degree z. In view of this, the robot-dedicated motor control section 4a controls the operation of the robot-dedicated motor M to drive the robot 2 by a degree corresponding to the bending degree z in the negative direction, in which the displacement in the Z axis direction is corrected.

This ensures that when the welding pressure F is at its desired value, the contact positions of the fixed electrode 10c and the movable electrode 10d with the workpiece W match the respective target positions of the fixed electrode 10c and the movable electrode 10d. In other words, driving the robot 2 absorbs the bending degree x, which is the displacement in the X axis direction, and the bending degree z, which is the displacement in the Z axis direction. This eliminates or minimizes the displacement of the contact positions of the fixed electrode 10c and the movable electrode 10d from the respective target positions.

Thus, position control is performed with respect to the operation of the gun-dedicated motor 10e and the operation of the robot-dedicated motor M, thereby matching the contact positions of the fixed electrode 10c and the movable electrode 10d with the respective target positions. This ensures that the welding pressure F, which the movable electrode 10d applies on the workpiece W, is at the desired value. With the welding pressure F being at its desired value, appropriate spot welding is performed. Further, matching the contact positions of the fixed electrode 10c and the movable electrode 10d with the respective target positions eliminates or minimizes unnecessary stress to act on the workpiece W. This ensures appropriate spot welding without strain deformation.

In a general spot welding apparatus, a common configuration is to: obtain through an experiment a table of relationship between, for example, the torque command to the gun-dedicated motor and the bending degree; and at the time of the spot welding, to search the table for a bending degree corresponding to the torque command of interest and to perform robot control based on the obtained bending degree.

However, in the above-described configuration, since the table provides experimental values, they are discrete values, leaving a possibility of non-continuous correction operation of the robot and other elements. In view of this, in this embodiment, formulae (Formulae (9) and (10)) are used instead of the table to calculate the bending degrees z and x. This ensures continuous correction operation of the robot 2 and the movable electrode 10d, including their tracks, resulting in reliable positioning of the movable electrode 10d at its target position.

FIG. 5 is a flowchart of an operation of the controller 4 of the spot welding apparatus 1, including an initial setting.

As shown in FIG. 5, first, the bending-degree calculation section 4d of the controller 4 obtains in advance the spring constants k(z) and k(x) of the gun arm 10b by an experiment (step S1). Specifically, the bending-degree calculation section 4d solves four Formulae (3) to (6) obtained by an experiment, thereby calculating the spring constants k(z) and k(x), and stores the spring constants in a memory, not shown. Further, at step S1, Poisson's ratio $\nu$ of the gun arm 10b is also calculated and stored in a memory. Step S1 is an initial setting of the spot welding apparatus 1.

Next, when the desired welding pressure Fa has been input and set, the bending-degree calculation section 4d uses Formulae (9) and (10) to calculate the bending degrees z and x of the gun arm 10b at the time when the desired welding pressure Fa is applied on the workpiece W (step S2). The bending-degree calculation section 4d outputs the bending degree z and the bending degree x to the gun-dedicated motor control section 4b, while at the same time outputs the bending degree z and the bending degree x to the robot-dedicated motor control section 4a.

The gun-dedicated motor control section 4b of the controller 4 position-controls the gun-dedicated motor 10e based on the bending degrees z and x. Specifically, the gun-dedicated motor control section 4b controls the operation of the gun-dedicated motor 10e to move the movable electrode 10d by a degree corresponding to the correction amount a, which is calculated based on the bending degrees z and x (step S3).

The robot-dedicated motor control section 4a of the controller 4 position-controls the robot-dedicated motor M based on the bending degrees z and x. Specifically, the robot-dedicated motor control section 4a controls the operation of the robot-dedicated motor M to drive the robot 2 by a degree corresponding to the bending degrees z and x (step S4). The processings at step S3 and step S4 correct the contact position of the movable electrode 10d with the workpiece W to match the target position of the movable electrode 10d at which the welding pressure F is at its desired value, and ensure the desired value for the welding pressure that the movable electrode 10d applies on the workpiece W.

While the gun-dedicated motor control and the robot-dedicated motor control have been described in this order for the convenience of description, the processings at step S3 and step S4 are executed synchronously with one another. This ensures early and accurate attainment of the target position for the contact position of the movable electrode 10d with the workpiece W.

Specifically, if, for example, the gun-dedicated motor is torque-controlled while the robot-dedicated motor is position-controlled, the operation of one of the motors lags behind the other due to a difference in control loop. Thus, it has been difficult to synchronize the correction operation by the gun-dedicated motor with the correction operation by the torque control.

In view of this, the gun-dedicated motor 10e and the robot-dedicated motor M according to this embodiment both have their operations controlled by position control. This ensures that the gun-dedicated motor 10e and the robot-dedicated motor M are controlled with their position control loops synchronized with one another. This keeps the operation of one of the motors from lagging behind the other, and ensures early and accurate attainment of the target position for the contact position of the movable electrode 10d with the workpiece W.

With the movable electrode 10d in its state of applying the desired welding pressure Fa on the workpiece W, the welding control section 4c of the controller 4 supplies current to between the fixed electrode 10c and the movable electrode 10d for a predetermined period of time, thus performing spot welding (step S5). Upon completion of the welding, the controller 4 moves the movable electrode 10d in a direction away from the fixed electrode 10c, thereby releasing the workpiece W, and turns the robot 2 into operation to move the spot welding gun 10 to a next welding point.

As has been described hereinbefore, in this embodiment, the controller 4 of the spot welding apparatus 1 performs position control of outputting a position command to the gun-dedicated motor 10e, so as to control the operation of the gun-dedicated motor 10e. This ensures that the welding pressure that the movable electrode 10d of the spot welding gun 10 applies on the workpiece W is at the desired value.

The above description is regarding displacements corresponding to the bending degrees z and x, which are based on the elastic deformation of the gun arm 10b, and regarding the correction of the displacements. It is also possible in the spot welding apparatus 1 to take into consideration correction of wear of the fixed electrode 10c and the movable electrode 10d.

For example, since the fixed electrode 10c and the movable electrode 10d wear through repeated holding of the workpiece W between them under pressure, the controller 4 acquires the amount of wear every time a predetermined plurality of spot weldings are performed. Then, when the workpiece W is held under pressure, the controller 4 corrects the position of the fixed electrode 10c and the amount of expansion or contraction of the movable electrode 10d by a degree corresponding to the acquired amount of wear of each of the electrodes 10c and 10d.

Thus, acquiring the amounts of wear of the electrodes and performing a correction corresponding to the amounts of wear ensure that the fixed electrode 10c and the movable electrode 10d are arranged at more suitable positions. The spot welding apparatus 1 according to this embodiment performs the above-described correction associated with the wear of the electrodes, and then further performs the correction associated with the elastic deformation of the gun arm 10b.

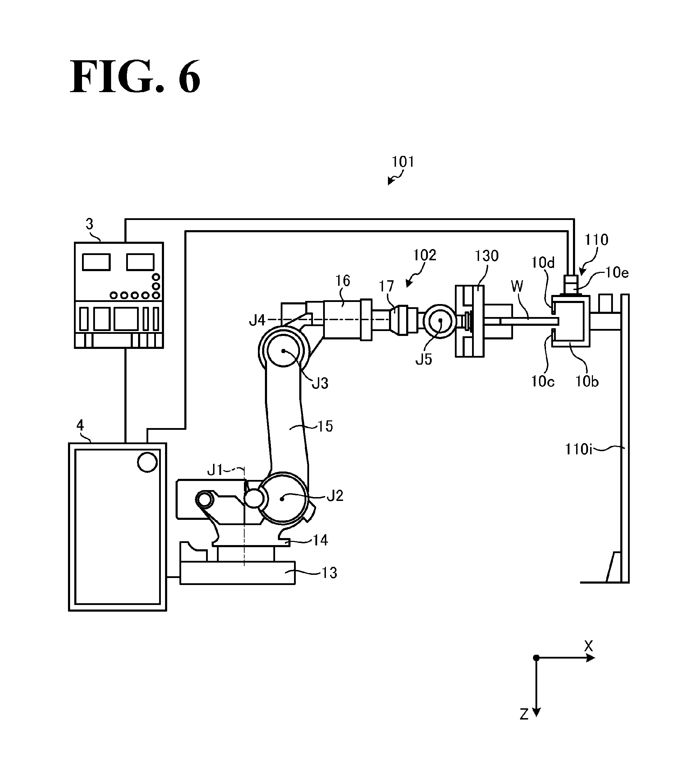

While in the above description the spot welding gun 10 is mounted to the distal end of the robot 2, this should not be construed in a limiting sense. For example, the spot welding gun may be a fixed-type spot welding gun. A specific example is shown in FIG. 6. In a spot welding apparatus 101, a spot welding gun 110 is fixed to a column 110i instead of the distal end of a robot 102. The configuration of the spot welding gun 110 is approximately the same as the configuration of the spot welding gun 10.

To the distal end of the robot 102, a hand 130 is mounted that is capable of gripping the workpiece W. The spot welding gun 110 is disposed within the operable range of the hand 130 of the robot 102.

In the spot welding apparatus 101 configured in the manner described above, the controller 4 turns the hand 130 into operation to grip the workpiece W and insert the workpiece W between the fixed electrode 10c and the movable electrode 10d of the spot welding gun 110. Then, similarly to the above description, the controller 4 controls the operations of the gun-dedicated motor 10e and the robot-dedicated motor M based on the bending degrees z and x and other parameters to correct the positions of the movable electrode 10d and the robot 102, and executes the spot welding.

Obviously, numerous modifications and variations of the present invention are possible in light of the above teachings. It is therefore to be understood that within the scope of the appended claims, the invention may be practiced otherwise than as specifically described herein.

1, 101    Spot welding apparatus

2, 102        Robot

3            Welding power source

4            Controller

4a           Robot-dedicated motor control section

4b           Gun-dedicated motor control section

4c           Welding control section

4d           Bending degree calculation section

10, 110    Spot welding gun

10b          Gun arm

| | |
|---|---|
| 10c | Fixed electrode |
| 10d | Movable electrode |
| 10e | Gun-dedicated motor |
| 10f | Ball screw mechanism |
| M1 to M6 | Robot-dedicated motor |

**Claims**

1. A spot welding apparatus, **characterized by**:

    a robot;
    a spot welding gun comprising:

        a gun arm;
        a fixed electrode fixed to the gun arm;
        a movable electrode disposed on the gun arm at a position opposite a position at which the fixed electrode is disposed; and
        a gun-dedicated motor configured to move the movable electrode; and

    a controller configured to output a position command to the gun-dedicated motor so as to control the gun-dedicated motor to move the movable electrode, configured to control the fixed electrode and the movable electrode to hold a to-be-welded object under pressure between the fixed electrode and the movable electrode, and configured to subject the to-be-welded object to spot welding.

2. The spot welding apparatus according to claim 1,
    wherein the fixed electrode in its axis direction and the movable electrode in its axis direction each comprise a Z axis direction, the Z axis direction being orthogonal to an X axis direction,
    wherein the gun arm comprises a bending degree z in the Z axis direction, and the gun arm comprises a bending degree x in the X axis direction,
    wherein the movable electrode is configured to apply a desired welding pressure Fa on the to-be-welded object, and
    wherein the controller is configured to calculate the bending degree z and the bending degree x that result from the welding pressure Fa applied on the to-be-welded object, and configured to control the gun-dedicated motor to move the movable electrode by a degree corresponding to a correction amount calculated based on the bending degree z and the bending degree x.

3. The spot welding apparatus according to claim 1 or 2, further comprising at least one robot-dedicated motor configured to drive the robot,
    wherein the fixed electrode in its axis direction and the movable electrode in its axis direction each comprise a Z axis direction, the Z axis direction being orthogonal to an X axis direction,
    wherein the gun arm comprises a bending degree z in the Z axis direction, and the gun arm comprises a bending degree x in the X axis direction,
    wherein the movable electrode is configured to apply a desired welding pressure Fa on the to-be-welded object, and
    wherein the controller is configured to calculate the bending degree z and the bending degree x that result from the welding pressure Fa applied on the to-be-welded object, and configured to control an operation of the robot-dedicated motor to drive the robot by a degree corresponding to the bending degree z and the bending degree x.

4. The spot welding apparatus according to claim 2 or 3, wherein the controller is configured to calculate the bending degree z by a following formula

$$z = Fa \times \sin\theta / k(z)$$

where $\theta$ denotes an angle defined by a vector of the welding pressure Fa and the X axis direction, and k(z) denotes a spring constant of the gun arm in the Z axis direction.

5. The spot welding apparatus according to any one of claims 2 to 4, wherein the controller is configured to calculate the bending degree x by a following formula

$$x = Fa \times \cos\theta/k(x)$$

where $\theta$ denotes an angle defined by a vector of the welding pressure Fa and the X axis direction, and k(x) denotes a spring constant of the gun arm in the X axis direction.

# FIG. 1

# FIG. 2

# FIG. 3

## FIG. 4

## FIG. 5

```
        ┌─────────────┐
        │    Start    │
        └─────────────┘
               │
               ▼
┌──────────────────────────────────────┐
│ Obtain spring constants k(z) and k(x) │──S1
│              in advance               │
└──────────────────────────────────────┘
               │
               ▼
┌──────────────────────────────────────┐
│      Calculate bending degrees z, x   │
│   when desired welding pressure Fa is │──S2
│       applied on workpiece W          │
└──────────────────────────────────────┘
               │
               ▼
┌──────────────────────────────────────┐
│  Position-control the gun-dedicated   │──S3
│   motor based on bending degrees z, x │
└──────────────────────────────────────┘
               │
               ▼
┌──────────────────────────────────────┐
│ Position-control the robot-dedicated  │──S4
│  motor based on bending degrees z, x  │
└──────────────────────────────────────┘
               │
               ▼
┌──────────────────────────────────────┐
│        Perform spot welding           │──S5
└──────────────────────────────────────┘
               │
               ▼
        ┌─────────────┐
        │     End     │
        └─────────────┘
```

# FIG. 6

Europäisches
Patentamt

European
Patent Office

Office européen
des brevets

**EUROPEAN SEARCH REPORT**

Application Number

EP 13 17 5140

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 274 840 B1 (KANJO MITSUNORI [JP]) 14 August 2001 (2001-08-14) * column 3, line 65 - column 4, line 39 * * page 9, line 61 - page 11, line 33; figures * ----- | 1-5 | INV. B23K11/11 B23K11/25 B23K11/31 B23K11/36 |
| X | JP H06 312273 A (CHI FUJIKOSHI CORP) 8 November 1994 (1994-11-08) * abstract; figures * | 1 | |
| A | * paragraphs [0006], [0008] - [0009], [0012] - [0013] * ----- | 2-5 | |
| X | JP 2002 321066 A (DENGENSHA MFG CO LTD) 5 November 2002 (2002-11-05) * abstract; figures * | 1 | |
| A | * paragraphs [0017] - [0018] * ----- | 2,3 | |

|  |  |
|---|---|
| | TECHNICAL FIELDS SEARCHED (IPC) |
| | B23K |

The present search report has been drawn up for all claims

| Place of search | Date of completion of the search | Examiner |
|---|---|---|
| Munich | 29 January 2014 | Jeggy, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 5140

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2014

| Patent document cited in search report | | Publication date | Patent family member(s) | | Publication date |
|---|---|---|---|---|---|
| US 6274840 | B1 | 14-08-2001 | NONE | | |
| JP H06312273 | A | 08-11-1994 | JP | 3526888 B2 | 17-05-2004 |
| | | | JP | H06312273 A | 08-11-1994 |
| JP 2002321066 | A | 05-11-2002 | NONE | | |

For more details about this annex : see Official Journal of the European Patent Office, No. 12/82

**REFERENCES CITED IN THE DESCRIPTION**

**Patent documents cited in the description**

- JP 2596722 B